(19) Europäisches Patentamt
European Patent Office
Office européen des brevets

(11) Veröffentlichungsnummer: **0 005 786**
**B1**

(12)
# EUROPÄISCHE PATENTSCHRIFT

(45) Veröffentlichungstag der Patentschrift: **25.11.81**

(51) Int. Cl.³: **C 08 L 83/04**

(21) Anmeldenummer: **79101553.0**

(22) Anmeldetag: **22.05.79**

(54) **Zu Elastomeren vernetzbare Massen.**

(30) Priorität: **26.05.78 DE 2823011**

(43) Veröffentlichungstag der Anmeldung: **12.12.79 Patentblatt 79/25**

(45) Bekanntmachung des Hinweises auf die Patenterteilung: **25.11.81 Patentblatt 81/47**

(84) Benannte Vertragsstaaten: **BE CH DE FR GB IT NL SE**

(56) Entgegenhaltungen:
**DE-A-2 036 720**
**FR-A-2 078 158**
**FR-A-2 194 744**
**FR-A-2 256 225**
**FR-A-2 256 226**
**US-A-3 870 766**

(73) Patentinhaber: **WACKER-CHEMIE GMBH, Prinzregentenstrasse 22, D-8000 München 22 (DE)**

(72) Erfinder: **Sommer, Oswin, Dr., Haydnstrasse 12, D-8263 Burghausen (DE)**
Erfinder: **Schiller, August, Dr., Birkenweg 7 a, D-8261 Marktl (DE)**
Erfinder: **Dorsch, Norman, Fuchshausen 148 1/3, D-8263 Burghausen (DE)**
Erfinder: **Strasser, Alois, Jägerweg 1, D-8263 Burghausen (DE)**

**EP 0 005 786 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Zu Elastomeren vernetzbare Massen

Unter Ausschluß von Wasser lagerfähige, bei Zutritt von Wasser bei Raumtemperatur zu Elastomeren vernetzende Massen aus kondensationsfähige Endgruppen aufweisendem Diorganopolysiloxan, mindestens drei an Silicium gebundene, hydrolysierbare Gruppen aufweisender Siliciumverbindung, rein-organischem Harz und gegebenenfalls weiteren Stoffen sind bereits bekannt. Hierzu sei z. B. auf US-PS 3 711 570 (ausgegeben: 16. Januar 1973, R. N. Lewis, Stauffer-Wacker Silicone Corporation), wobei dieser US-PS die FR-PS 2 064 832 entspricht, verwiesen. Gemäß den vorstehend genannten Druckschriften besteht das rein-organische Harz aus Polyvinylchloridpulver. Gegenüber den aus den vorstehend genannten Druckschriften bekannten Massen haben die erfindungsgemäßen Massen z. B. den Vorteil, daß die daraus hergestellten Elastomeren auf unbehandeltem Holz und lackiertem oder lasiertem Holz als Unterlagen, auf denen sie erzeugt wurden, besser haften. Gemäß US-PS 3 497 570, K. B. Yerrick, Dow Corning Corporation, wird Polyacrylnitrilpulver in Mengen von 1,0 bis 15 Gewichtsprozent, bezogen auf das Gewicht von Diorganopolysiloxan, zur Verbesserung der Wärmebeständigkeit von Organopolysiloxanelastomeren eingesetzt.

Gemäß DE-OS 2 036 720 werden durch Zusatz von Hohlperlen aus bestimmten Thermoplasten Modul, Härte und Raumgewicht von Elastomeren aus unter Ausschluß von Wasser lagerfähigen, bei Zutritt von Wasser bei Raumtemperatur vernetzenden Massen aus kondensationsfähige Endgruppen aufweisenden Diorganopolysiloxan und mindestens drei an Silicium gebundene, hydrolysierbare Gruppen aufweisender Siliciumverbindung verringert und dadurch auch die Beanspruchung der Haftung der Elastomeren auf Unterlagen durch Zugbelastung vermindert. Daß durch den Zusatz dieser Hohlperlen auch die Haftung selbst, d. h. Stärke der Bindung vom Elastomer auf der Unterlage, erhöht wird, wird in DE-OS 2 036 720 nicht behauptet und es besteht auch keine Veranlassung, etwas derartiges anzunehmen.

Gegenstand der Erfindung sind unter Ausschluß von Wasser lagerfähige, bei Zutritt von Wasser bei Raumtemperatur zu Elastomeren vernetzende Massen aus kondensationsfähige Endgruppen aufweisendem Diorganopolysiloxan, mindestens drei an Silicium gebundene, hydrolysierbare Gruppen aufweisender Siliciumverbindung, Acrylnitrilpolymerisat und gegebenenfalls weiteren Stoffen, dadurch gekennzeichnet, daß die Massen 30 bis 100 Gewichtsprozent, bezogen auf das Gewicht von kondensationsfähige Endgruppen aufweisendem Diorganopolysiloxan, von durch Polymerisation bzw. Mischpolymerisation in wäßrigem Medium hergestelltem Pulver aus Homopolymerisat des Acrylnitrils oder Mischpolymerisat des Acrylnitrils enthalten.

Aus FR-PS 2 256 226 ist bekannt, z. B. Acrylnitril oder Gemische aus Acrylnitril und damit mischpolymerisierbarem Monomer, wie Äthylmethacrylat, in Gegenwart von kondensationsfähige Endgruppen aufweisendem Diorganopolysiloxan zu polymerisieren. Dabei wird durch Verzahnung oder Verknäuelung der wachsenden Polymerketten mit den bereits vorhandenen Diorganopolysiloxanketten eine Masse erhalten, die nach Zusatz von mindestens drei an Silicium gebundene, hydrolysierbare Gruppen aufweisender Siliciumverbindung zu einem Elastomer mit hoher Reiß- und Zugfestigkeit vernetzt. Eine solche Verzahnung oder Verknäuelung von wachsenden Polymerketten mit bereits vorhandenen Diorganopolysiloxanketten kann beim Vermischen von Diorganopolysiloxan mit erfindungsgemäß verwendetem fertigem Homo- oder Mischpolymerisat nicht auftreten. Schon deshalb konnte die FR-PS den Gegenstand der Erfindung nicht nahelegen.

Als kondensationsfähige Endgruppen aufweisende Diorganopolysiloxane können auch im Rahmen der Erfindung die gleichen Diorganopolysiloxane verwendet werden, die bisher zur Herstellung von unter Ausschluß von Wasser lagerfähigen, bei Zutritt von Wasser bei Raumtemperatur zu Elastomeren vernetzenden Massen aus kondensationsfähige Endgruppen aufweisendem Diorganopolysiloxan und mindestens drei an Silicium gebundene, hydrolysierbare Gruppen aufweisender Siliciumverbindung verwendet werden konnten. Die zur Herstellung solcher Massen meist verwendeten und auch im Rahmen der Erfindung bevorzugt verwendeten, kondensationsfähige Endgruppen aufweisenden Diorganopolysiloxane können z. B. durch die allgemeine Formel

$$HO(SiR_2O)_xSiR_2OH$$

wiedergegeben werden. In dieser Formel bedeutet R gleiche oder verschiedene, einwertige, gegebenenfalls substituierte Kohlenwasserstoffreste und x ist eine ganze Zahl im Wert von mindestens 10.

Innerhalb bzw. entlang den Siloxanketten der vorstehend angegebenen Formel können, was bei derartigen Formeln üblicherweise nicht dargestellt wird, zusätzlich zu den Diorganosiloxaneinheiten ($SiR_2O$) noch andere Siloxaneinheiten vorliegen. Beispiele für solche anderen, meist lediglich als Verunreinigungen vorliegenden Siloxaneinheiten sind solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht der kondensationsfähige

Endgruppen aufweisenden Diorganopolysiloxane. Die Hydroxylgruppen in der oben angegebenen Formel von kondensationsfähige Endgruppen aufweisenden Diorganopolysiloxan können, falls erwünscht, vollständig oder teilweise durch andere kondensationsfähige Gruppen als Si-gebundene Hydroxylgruppen ersetzt sein. Solche anderen kondensationsfähigen Gruppen sind insbesondere Alkoxygruppen mit 1 bis 5 Kohlenstoffatomen und Alkoxyalkylenoxygruppen mit 1 bis 5 Kohlenstoffatomen, wie der Methoxyäthylenoxyrest, sowie die hydrolysierbaren Gruppen in den weiter unten näher erläuterten, mindestens drei an Silicium gebundene, hydrolysierbare Gruppen aufweisenden Siliciumverbindungen. Dabei sei in diesem Zusammenhang darauf hingewiesen, daß, wenn die kondensationsfähigen Gruppen im Diorganopolysiloxan mit kondensationsfähigen Endgruppen hydrolysierbare Gruppen sind, diese hydrolysierbaren Gruppen keineswegs mit den hydrolysierbaren Gruppen in jeweils eingesetzter, mindestens drei an Silicium gebundene, hydrolysierbare Gruppen aufweisender Siliciumverbindungen, die vom Fachmann im allgemeinen als »Vernetzer« bezeichnet wird, identisch sein müssen.

Beispiele für Kohlenwasserstoffreste R sind Alkylreste, wie der Methyl-, Äthyl-, n-Propyl- und Isopropylrest sowie Octadecylreste; Alkenylreste, wie der Vinyl- und Allylrest; cycloaliphatische Kohlenwasserstoffreste, wie der Cyclopentyl- und Cyclohexylrest sowie Methylcyclohexyl- und Cyclohexenylreste; Arylreste, wie der Phenylrest und Xenylreste; Aralkylreste, wie der Benzyl-, beta-Phenyläthyl- und der beta-Phenylpropylrest; sowie Alkarylreste, wie Tolylreste.

Als substituierte Kohlenwasserstoffreste R sind Halogenarylreste, wie Chlorphenyl- und Bromphenylreste; sowie Cyanalkylreste, wie der beta-Cyanäthylrest, bevorzugt.

Insbesondere wegen der leichteren Zugänglichkeit sind vorzugsweise mindestens 50%, insbesondere mindestens 90%, der Anzahl der SiC-gebundenen Reste im kondensationsfähige Endgruppen aufweisenden Diorganopolysiloxan und damit der Reste R in den oben angegebenen Formeln Methylreste.

Bei dem kondensationsfähige Endgruppen aufweisenden Diorganopolysiloxan kann es sich um Homo- oder Mischpolymerisate handeln. Es können Gemische aus verschiedenen, kondensationsfähige Endgruppen aufweisenden Diorganopolysiloxanen verwendet werden.

Die Viskosität der kondensationsfähige Endgruppen aufweisenden Diorganopolysiloxane beträgt vorzugsweise 100 bis 500000 mPa · s bei 25° C.

Bei der Bereitung der erfindungsgemäßen Massen können als mindestens drei an Silicium gebundene, hydrolysierbare Gruppen aufweisende Siliciumverbindungen ebenfalls die gleichen mindestens drei an Silicium gebundene, hydrolysierbare Gruppen aufweisenden Siliciumverbindungen verwendet werden, die auch bisher zur Herstellung von unter Ausschluß von Wasser lagerfähigen, bei Zutritt von Wasser bei Raumtemperatur zu Elastomeren vernetzenden Massen durch Vermischen von mindestens einer derartigen Siliciumverbindung mit kondensationsfähige Endgruppen aufweisendem Diorganopolysiloxan verwendet werden konnten.

Beispiele für im Rahmen der Erfindung verwendbare, mindestens drei an Silicium gebundene, hydrolysierbare Gruppen aufweisende Siliciumverbindungen sind somit Silane der allgemeinen Formel

$$R_aSiZ_{4-a},$$

worin R die oben dafür angegebene Bedeutung hat, Z eine hydrolysierbare Gruppe und a 0 oder 1 ist, und deren 2 bis 10 Siliciumatome je Molekül aufweisende Teilhydrolysate.

Beispiele für hydrolysierbare Gruppen Z sind Acyloxygruppen ($-OOCR'$), gegebenenfalls substituierte Kohlenwasserstoffoxygruppen ($-OR'$), Kohlenwasserstoffoxykohlenwasserstoffoxygruppen ($-OR''OR'$, wobei R'' ein zweiwertiger Kohlenwasserstoffrest, z. B. der $-CH_2-CH_2-$Rest, ist), Aminoxygruppen ($-ONR'_2$), Aminogruppen (z. B. $-NR'_2$), Acylaminogruppen (z. B. $-NR'COR'$), Oximgruppen (z. B. $-ON=CR'_2$) und Phosphatgruppen

$$\left[\begin{array}{c} OP(OR')_2 \\ \| \\ O \end{array}\right]$$

In diesen Formeln bedeutet R' gleiche oder verschiedene, einwertige, gegebenenfalls substituierte Kohlenwasserstoffreste; der Fachmann weiß aber auch, daß zumindest bei manchen der vorstehend angegebenen Formeln zumindest einer der Reste R' Wasserstoff sein kann. Die Beispiele für Kohlenwasserstoffreste R gelten auch für Kohlenwasserstoffreste R' und die Beispiele für substituierte Kohlenwasserstoffreste R gelten auch für substituierte Kohlenwasserstoffreste R'.

Beispiele für Acyloxygruppen sind insbesondere solche mit 1 bis 18 Kohlenstoffatomen, wie Formyloxy-, Acetoxy-, Propionyloxy-, Valeroyloxy-, Caproyloxy-, Myristyloxy- und Stearoyloxygruppen, wobei Acetoxygruppen besonders bevorzugt sind.

Beispiele für Kohlenwasserstoffoxygruppen sind insbesondere Alkoxygruppen mit 1 bis 10 Kohlenstoffatomen, wie Methoxy-, Äthoxy-, n-Propoxy-, Isopropoxy-, Butoxy-, Hexyloxy-, Heptyloxy-und Octyloxygruppen sowie andere Kohlenwasserstoffoxygruppen mit 1 bis 10 Kohlenstoffatomen, wie Vinyloxy-, Allyloxy-, Äthylallyloxy-, Isopropenyloxy-, Butadienyloxy- und Phenoxygruppen.

Ein Beispiel für eine Kohlenwasserstoffoxykohlenwasserstoffoxygruppe ist die Methoxyäthylenoxygruppe.

Beispiele für Aminoxygruppen sind Dimethylaminoxy-, Diäthylaminoxy-, Dipropylaminoxy-, Dibutylaminoxy-, Dioctylaminoxy-, Diphenylaminoxy-, Äthylmethylaminoxy- und Methylphenylaminoxygruppen.

Beispiele für Aminogruppen sind n-Butylamino-, sec.-Butylamino- und Cyclohexylaminogruppen.

Ein Beispiel für eine Acylaminogruppe ist die Benzoylmethylaminogruppe.

Beispiele für Oximgruppen sind Acetaldoxim-, Acetophenonoxim-, Acetonoxim-, Benzophenonoxim-, 2-Butanonoxim-, Diisopropylketoxim- und Chlorcyclohexanonoximgruppen.

Beispiele für Phosphatgruppen sind Dimethylphosphat-, Diäthylphosphat-, Dibutylphosphat-, Dioctylphosphat-, Methyläthylphosphat-, Methylphenylphosphat- und Diphenylphosphatgruppen.

Mindestens drei an Silicium gebundene hydrolysierbare Gruppen aufweisende Siliciumverbindung wird vorzugsweise in Mengen von 0,5 bis 15 Gewichtsprozent, bezogen auf das Gewicht von kondensationsfähige Endgruppen aufweisendem Diorganopolysiloxan, eingesetzt.

Die Herstellung der erfindungsgemäß verwendeten Pulver aus Homopolymerisat des Acrylnitrils oder Mischpolymerisat des Acrylnitrils durch Polymerisation von Acrylnitril bzw. Mischpolymerisation von Acrylnitril und mindestens einem anderen Monomeren, insbesondere Methacrylsäureester, in wäßrigem Medium kann durch Emulsions- oder Suspensionspolymerisation erfolgt sein. Bevorzugt sind durch Suspensionspolymerisation hergestellte Pulver, die höchstens 1,5 Gewichtsprozent Teilchen mit einem Durchmesser von mehr als 200 Mikrometer enthalten.

Vorzugsweise beträgt die Menge von durch Polymerisation in wäßrigem Medium hergestelltem Pulver aus Homopolymerisat des Acrylnitrils oder Mischpolymerisat des Acrylnitrils 35 bis 55 Gewichtsprozent, bezogen auf das Gewicht von Kondensationsfähige Endgruppen aufweisendem Diorganopolysiloxan.

Bevorzugt als Mischpolymerisat des Acrylnitrils ist solches aus Acrylnitril und bis zu 20 Gewichtsprozent, bezogen auf das Gesamtgewicht des Mischpolymerisats, Methacrylsäureester.

Beispiele für Methacrylsäureester sind Methylmethacrylat, Äthylmethacrylat, Propylmethacrylate und Butylmethacrylate.

Zusätzlich zu kondensationsfähige Endgruppen aufweisendem Diorganopolysiloxan, mindestens drei an Silicium gebundene hydrolysierbare Gruppen aufweisender Siliciumverbindung und durch Polymerisation bzw. Mischpolymerisation in wäßrigem Medium hergestelltem Pulver aus Homopolymerisat des Acrylnitrils oder Mischpolymerisat des Acrylnitrils können ebenfalls bei der Bereitung der erfindungsgemäßen Massen Stoffe mitverwendet werden, die auch bisher bei der Herstellung von unter Ausschluß von Wasser lagerfähigen, bei Zutritt von Wasser bei Raumtemperatur zu Elastomeren vernetzenden Massen aus Kondensationsfähige Endgruppen aufweisendem Diorganopolysiloxan und mindestens drei an Silicium gebundene, hydrolysierbare Gruppen aufweisender Siliciumverbindung als zusätzliche Stoffe mitverwendet werden konnten.

Beispiele für solche zusätzlich mitverwendbaren Stoffe sind verstärkende Füllstoffe, nicht verstärkende Füllstoffe, Pigmente, lösliche Farbstoffe, Riechstoffe, Organopolysiloxanharze, einschließlich solcher aus $(CH_3)SiO_{1/2}$- und $SiO_{4/2}$-Einheiten, andere rein-organische Harze als durch Polymerisation bzw. Mischpolymerisation in wäßrigem Medium hergestelltes Pulver aus Homopolymerisat des Acrylnitrils oder Mischpolymerisat des Acrylnitrils, wie Polyvinylchloridpulver, Korrosionsinhibitoren, Oxydationsinhibitoren, Hitzestabilisatoren, Lösungsmittel, weitere Mittel zur Verbesserung der Haftung der aus den Massen hergestellten Elastomeren auf den Unterlagen, auf denen die Elastomeren erzeugt wurden, wie $\gamma$-Glycidyloxypropyltriäthoxysilan, Kondensationskatalysatoren, wie Zinnsalze oder Organozinnsalze von Carbonsäuren, z. B. Dibutylzinndilaurat, und Weichmacher, wie bei Raumtemperatur flüssige, durch Trimethylsiloxygruppen endblockierte Dimethylpolysiloxane oder Phosphorsäureester, Ultraviolettabsorber und zellenerzeugende Mittel, wie Azodicarbonamid.

Beispiele für verstärkende Füllstoffe, also für Füllstoffe mit einer Oberfläche von mindestens 50 $m^2/g$, sind insbesondere pyrogen erzeugte Siliciumdioxyde, unter Erhaltung der Struktur entwässerte Kieselsäure-Hydrogele und andere Arten von gefälltem Siliciumdioxyd mit einer Oberfläche von mindestens 50 $m^2/g$ und Metalloxyde, wie Titandioxyd, Ferrioxyd, Aluminiumoxyd und Zinkoxyd, soweit sie jeweils eine Oberfläche von mindestens 50 $m^2/g$ aufweisen.

Beispiele für nicht verstärkende Füllstoffe, also für Füllstoffe mit einer Oberfläche von weniger als 50 $m^2/g$, sind bzw. können sein: Quarzmehl, Diatomeenerde, Neuburger Kreide (englisch: Neuburg Chalk), Calciumsilikat, Zirkoniumsilikat, Calciumcarbonat, z. B. in Form von gemahlener Kreide, calciniertes Aluminiumsilikat und pulverförmiges Natriumaluminiumsilikat mit Molekularsiebeigenschaften.

Auch faserige Füllstoffe, wie Asbeste und Glasfasern, insbesondere solche mit einer durchschnittlichen Länge von höchstens 0,5 mm, und/oder organische Fasern können mitverwendet werden.

Alle oben genannten, verstärkenden und nicht verstärkenden Füllstoffe, soweit sie anorganischer

Natur sind, können hydrophobiert sein, beispielsweise durch Behandlung mit Trimethyläthoxysilan oder Stearinsäure. Falls erwünscht, kann eine solche Behandlung z. B. in einer Kugelmühle durchgeführt worden sein.

Es können Gemische aus verschiedenen verstärkenden und/oder nicht verstärkenden Füllstoffen verwendet werden.

Zur Bereitung der erfindungsgemäßen Massen können alle Bestandteile der jeweiligen Masse in beliebiger Reihenfolge miteinander vermischt werden. Dieses Vermischen erfolgt vorzugsweise bei Raumtemperatur und unter Ausschluß von Wasser. Falls erwünscht, kann dieses Vermischen aber auch bei höheren Temperaturen erfolgen, z. B. bei einer Temperatur im Bereich von 35 bis 150° C.

Für die Vernetzung der erfindungsgemäßen Massen reicht der normale Wassergehalt der Luft aus. Die Vernetzung kann, falls erwünscht, auch bei höheren Temperaturen als Raumtemperatur oder niedrigeren Temperaturen als Raumtemperatur, z. B. bei 0 bis 10° C, und/oder mittels den normalen Wassergehalt der Luft übersteigenden Konzentrationen von Wasser durchgeführt werden.

Die erfindungsgemäßen Massen sind standfest (englisch: nonslump properties). Deshalb laufen sie aus senkrechten oder gegenüber der Waagerechten geneigten Fugen oder von senkrechten oder gegenüber der Waagerechten geneigten Flächen vor der Vernetzung zum Elastomeren nicht ab.

Die aus den erfindungsgemäßen Massen erzeugten Elastomeren haften ganz besonders gut auf lackiertem, lasiertem oder unlasiertem Holz, oxydiertem, insbesondere elektrolytisch oxydiertem Aluminium und unbehandeltem Aluminium sowie auf Glas, wenn sie auf diesen Unterlagen erzeugt wurden und auf diesen Unterlagen verbleiben, auch wenn die Unterlagen vor dem Aufbringen der Massen nicht grundiert wurden. Sie eignen sich daher besonders gut z. B. zum Einbau von Fenstern.

Die aus den erfindungsgemäßen Massen auf anderen Unterlagen als den vorstehend genannten Unterlagen, wie Email, Porzellan, Steingut und gebranntem Ton, erzeugten Elastomeren haften auf diesen Unterlagen ebenfalls sehr gut.

Die erfindungsgemäßen Massen eignen sich allgemein als Klebstoffe, Verkittungsmassen, Beschichtungsmassen und zum Abdichten von Fugen, einschließlich senkrecht verlaufender Fugen, und ähnlichen Leerräumen mit lichten Weiten von z. B. 1 mm bis 50 mm, beispielsweise von Land-, Wasser- oder Luftfahrzeugen sowie von Gebäuden, einschließlich solcher aus Leichtbausteinen oder vorgefertigten Bauteilen.

Gegenüber Elastomeren, die aus bisher bekannten, bei Raumtemperatur zu Elastomeren vernetzenden Massen aus kondensationsfähige Endgruppen aufweisendem Diorganopolysiloxan und mindestens drei an Silicium gebundene, Acyloxygruppen oder über Stickstoff an Silicium gebundene Aminogruppen als hydrolysierbare Gruppen aufweisender Siliciumverbindung erzeugt wurden, haben Elastomere aus den erfindungsgemäßen Massen zudem den Vorteil, daß sie sich trockener und weniger gummiartig anfühlen, was z. B. bei manchen Beschichtungen vorteilhaft sein kann, und an Stoffen, an denen sie nicht haften sollen, viel weniger stark haften, was z. B. das Öffnen von Fenstern und Türen, die mit den erfindungsgemäßen Massen abgedichtet sind, z. B. gegen Schall und Zugluft, sehr erleichtert.

In dem folgenden Beispiel und den Vergleichsversuchen beziehen sich alle Angaben von Teilen und Prozentsätzen auf das Gewicht.

## Beispiel

Bei Raumtemperatur und einem absoluten Druck von 10 mbar werden in einem Planetenmischer 50 Teile in den endständigen Einheiten je eine Si-gebundene Hydroxylgruppe aufweisendes Dimethylpolysiloxan mit einer Viskosität von 80 000 mPa · s bei 25° C mit 19 Teilen eines durch Trimethylsiloxygruppen endblockierten Dimethylpolysiloxans mit einer Viskosität von 100 mPa · s bei 25° C, 6 Teilen Methyltriacetoxysilan, 20 Teilen eines durch Suspensionspolymerisation in wäßrigem Medium hergestellten Pulvers aus 94% sich von Acrylnitril und 6% sich von Methacrylsäuremethylester ableitenden Einheiten, das höchstens 1,5 Gewichtsprozent Teilchen mit einem Durchmesser von mehr als 200 Mikrometer enthält, und 5 Teilen einer Kreide, deren Oberfläche mit 3%, bezogen auf das Gewicht der Kreide, Stearinsäure überzogen ist, vermischt.

Die so erhaltene Masse ist standfest, unter Ausschluß von Wasser lagerfähig und härtet unter der Einwirkung des Wasserdampfs der Luft zu einem Elastomeren.

## Vergleichsversuch 1

Die im Beispiel 1 beschriebene Arbeitsweise wird wiederholt mit der Abänderung, daß die 20 Teile Pulver aus Mischpolymerisat des Acrylnitrils und 5 Teile der Kreide durch 25 Teile der gleichen Kreide ersetzt und außerdem 5,5 Teile pyrogen erzeugtes Siliciumdioxyd eingemischt werden, um ebenfalls eine standfeste Masse zu erzielen.

Vergleichsversuch 2

Die im Beispiel beschriebene Arbeitsweise wird wiederholt mit der Abänderung, daß die 20 Teile Pulver aus Mischpolymerisat des Acrylnitrils durch 20 Teile eines durch Emulsionspolymerisation hergestellten Polyvinylchlorids mit einer durchschnittlichen Teilchengröße von 1 bis 2 Mikrometer ersetzt und außerdem 6 Teile pyrogen erzeugtes Siliciumdioxyd eingemischt werden, um ebenfalls eine standfeste Masse zu erzielen.

Mit Proben der gemäß dem Beispiel und den Vergleichsversuchen hergestellten Massen werden 4 mm dicke und 10 $cm^2$ umfassende Schichten zwischen Platten mit den Abmessungen 40 mm · 25 mm aus den in der folgenden Tabelle angegebenen Stoffen und jeweils einer Platte aus dem gleichen Stoff erzeugt. Nach 3 Wochen Lagerung an der Luft bei Raumtemperatur (Tabelle I) bzw. nach 10 Tagen Lagerung an der Luft, an die sich eine Lagerung von 2 Tagen unter Wasser, dann wieder eine Lagerung von 2 Tagen an der Luft, dann wieder eine Lagerung von 1 Tag unter Wasser und schließlich eine Lagerung von 2 Tagen an der Luft anschließt, wobei wieder alle Lagerungen bei Raumtemperatur erfolgen (Rabelle II), werden die Platten mit einer Geschwindigkeit von 5 mm je Minute von einander getrennt und die dazu erfoderliche Kraft $N/m^2$ gemessen. Es werden folgende Ergebnisse erhalten, wobei bedeuten:

A = Adhäsionsriß = Trennung zwischen Beschichtung und Platte,
K = Kohäsionsriß = Riß in der Beschichtung,
AK = Adhäsionsriß und Kohäsionsriß.

Tabelle I

| Platten aus | Masse hergestellt gemäß | | | | | |
|---|---|---|---|---|---|---|
| | Beispiel | | Vergleichsversuch 1 | | Vergleichsversuch 2 | |
| | $N/m^2$ | Riß-Art | $N/m^2$ | Riß-Art | $N/m^2$ | Riß-Art |
| Glas | 70 | K | 60 | K | 45 | K |
| Aluminium | 65 | K | 55 | K | 17 | A |
| Fichte, unbehandelt | 64 | K | 25 | AK | 38 | A |
| Fichte*) | 66 | K | 35 | AK | 43 | K |
| Fichte**) | 70 | K | 28 | AK | 45 | K |
| Sipo-Holz, unbeh. | 65 | K | 36 | AK | 33 | A |
| Sipo-Holz*) | 70 | K | 55 | K | 45 | K |
| Sipo-Holz**) | 67 | K | 12,5 | A | 44 | K |

*) Mit handelsüblichem weißem Alkydharzlack überzogen.
**) Mit handelsüblichem (Registriertes Warenzeichen: »Xyladecor«) Holzschutzmittel, das gleichzeitig als farblose Lasur dient, überzogen.

Tabelle II

| Platten aus | Masse hergestellt gemäß | | | | | |
|---|---|---|---|---|---|---|
| | Beispiel | | Vergleichsversuch 1 | | Vergleichsversuch 2 | |
| | $N/m^2$ | Riß-Art | $N/m^2$ | Riß-Art | $N/m^2$ | Riß-Art |
| Fichte, unbehandelt | 71 | K | 32 | AK | 29 | A |
| Fichte*) | 61 | K | ***) | – | 27 | AK |
| Fichte**) | 68 | K | ***) | – | 38 | AK |
| Sipo-Holz, unbeh. | 72 | K | 55 | K | 13 | A |
| Sipo-Holz*) | 62 | K | ***) | – | 17 | A |
| Sipo-Holz**) | 63 | K | **) | – | 12 | A |

*) Wie bei Tabelle I.
**) Wie bei Tabelle I.
***) Nicht bestimmt.

**Patentansprüche**

1. Unter Ausschluß von Wasser lagerfähige, bei Zutritt von Wasser bei Raumtemperatur zu Elastomeren vernetzende Massen aus kondensationsfähige Endgruppen aufweisendem Diorganopolysiloxan, mindestens drei an Silicium gebundene, hydrolysierbare Gruppen aufweisender Siliciumverbindung, Acrylnitrilpolymerisat und gegebenenfalls weiteren Stoffen, dadurch gekennzeichnet, daß die Massen 30 bis 100 Gewichtsprozent, bezogen auf das Gewicht von kondensationsfähige Endgruppen aufweisendem Diorganopolysiloxan, von durch Polymerisation bzw. Mischpolymerisation in wäßrigem Medium hergestelltem Pulver aus Homopolymerisat des Acrylnitrils oder Mischpolymerisat des Acrylnitrils enthalten.

2. Massen nach Anspruch 1, dadurch gekennzeichnet, daß sie durch Suspensionspolymerisation in wäßrigem Medium hergestelltes Pulver aus Homopolymerisat des Acrylnitrils oder Mischpolymerisat des Acrylnitrils, das höchstens 1,5 Gewichtsprozent Teilchen mit einem Durchmesser von mehr als 200 Mikrometer enthält, enthalten.

3. Massen nach Anspruch 1 oder 2, dadurch gekennzeichnet, daß sie durch Polymerisation bzw. Mischpolymerisation in wäßrigem Medium hergestelltes Pulver aus Homopolymerisat des Acrylnitrils oder Mischpolymerisat des Acrylnitrils in Mengen von 35 bis 55 Gewichtsprozent, bezogen auf das Gewicht von kondensationsfähige Endgruppen aufweisendem Diorganopolysiloxan, enthalten.

4. Massen nach mindestens einem der Ansprüche 1 bis 3, dadurch gekennzeichnet, daß sie durch Mischpolymerisation in wäßrigem Medium hergestelltes Mischpolymerisat aus Acrylnitril und bis zu 20 Gewichtsprozent, bezogen auf das Gesamtgewicht des Mischpolymerisats, Methacrylsäureester enthalten.

**Claims**

1. Compositions that consist of a diorganopolysiloxane having condensable terminal groups, a silicon compound having at least three silicon-bonded hydrolysable groups, an acrylonitrile polymer and, optionally, further substances, that crosslink at room temperature upon the admission of water to form elastomers, and that are storable in the absence of water, characterised in that the compositions contain 30 to 100% by weight, calculated on the weight of the diorganopolysiloxane having condensable terminal groups, of a powder consisting of a homopolymer of acrylonitrile or a copolymer of acrylonitrile that has been produced by polymerisation or copolymerisation, respectively, in an aqueous medium.

2. Compositions according to claim 1, characterised in that they contain a powder consisting of a homopolymer of acrylonitrile or a copolymer of acrylonitrile, produced by suspension polymerisation in an aqueous medium, that contains not more than 1.5% by weight of particles having a diameter of more than 200 micrometres.

3. Compositions according to claim 1 or 2, characterised in that they contain a powder consisting of a homopolymer of acrylonitrile or a copolymer of acrylonitrile produced by polymerisation or copolymerisation, respectively, in an aqueous medium, in quantities of from 35 to 55% by weight,

calculated on the weight of the diorganopolysiloxane having condensable terminal groups.

4. Compositions according to at least one of claims 1 to 3, characterised in that they contain a copolymer, produced by copolymerisation in an aqueous medium, of acrylonitrile and up to 20% by weight, calculated on the total weight of the copolymer, of a methacrylate.

**Revendications**

1. Composition constituée d'un poly-diorgano-siloxane présentant des groupes terminaux capables d'une condensation, d'un composé de silicium présentant au moins trois groupes hydrolysables fixés au silicium, d'un polymère de l'acrylonitrile et éventuellement d'autres substances, cette composition pouvant être conservée à l'abri de l'eau, se réticulant en présence d'eau à la température abiante pour donner des élastomères et étant caractérisée en ce qu'elle contient 30 à 100% en poids, par rapport au poids du poly-diorgano-siloxane présentant des groupes terminaux capables d'une condensation, d'une poudre, produite par polymérisation ou copolymérisation en milieu aqueux, d'un homopolymère de l'acrylonitrile ou d'un copolymère de l'acrylonitrile.

2. Composition selon la revendication 1, caractérisée en ce qu'elle comporte une poudre, produite par polymérisation en suspension en milieu aqueux, d'un homopolymère de l'acrylonitrile ou d'un copolymère de l'acrylonitrile qui contient au maximum 1,5% en poids de particules dont le diamètre est supérieur à 200 micormètres.

3. Composition selon l'une des revendications 1 et 2, caractérisée en ce qu'elle contient de 35 à 55% en poids, par rapport au poids du poly-diorgano-siloxane présentant des groupes terminaux capables d'une condensation, d'une poudre, produite par polymérisation ou copolymérisation en milieu aqueux, d'un homopolymère de l'acrylonitrile ou d'un copolymère de l'acrylonitrile.

4. Composition selon l'une quelconque des revendications précédentes, caractérisée en ce qu'elle contient un copolymère, produit par copolymérisation en milieu aqueux, de l'acrylonitrile et d'au maximum 20% en poids, par rapport au poids global du copolymère, d'un ester de l'acide méthacrylique.